# EUROPEAN PATENT APPLICATION

(11) **EP 4 311 011 A1**
(43) Date of publication of application: **24.01.2024**
(21) Application number: 21932131.2
(22) Date of filing: 24.03.2021
(51) Int. Cl.: H01M 50/531, H01M 10/0587

(54) **BATTERY CELL AND POWER CONSUMING APPARATUS**

(71) Applicant: Ningde Amperex Technology Limited, Ningde, Fujian 352100 (CN)
(72) Inventor: LIU, Yadong, Ningde, Fujian 352100 (CN); JIN, Zhesheng, Ningde, Fujian 352100 (CN)
(74) Representative: Icosa
(86) International application number: PCT/CN2021/082773
(87) International publication number: WO 2022/198503

(57) **Abstract**

A battery cell and an electrical device. The battery cell includes a shell (100), an electrode assembly (200), a tab (300) and an insulation element (400). The electrode assembly (200) is provided with two opposite first side faces (201), and each first side face (201) is provided with a first end (2011) and a second end (2012) that are opposite to each other. The tab (300) includes a connecting portion (310) and an extending portion (320), the connecting portion (310) is connected to the electrode assembly (200), and the extending portion (320) and the connecting portion (310) are welded and fixed, and form a weld mark. The insulation element (400) includes a hot melting portion (410) and an insulating portion (420). The hot melting portion (410) is fixed to the first side face (201); and the insulating portion (420) is connected to the hot melting portion (410), is fixed to the tab (300), and covers at least part of the weld mark. The insulation element (400) covers the at least a part of the weld mark, which can reduce or eliminate an area of contact between the weld mark and the shell (100), thereby reducing potential safety hazards of the battery cell possibly being punctured by the weld mark of the tab (300).

## Description

### TECHNICAL FIELD

This application relates to the technical field of batteries, and in particular, to a battery cell and an electrical device.

### BACKGROUND

A battery cell is a device that converts energy from the outside into electric energy and stores it inside in order to supply power to external electrical devices (e.g. portable electronic devices) at moments of need. Generally, the battery cell includes a shell, an electrode assembly accommodated in the shell, an electrolyte, and a tab connected to the electrode assembly.At present, tabs of some battery cells on the market each includes two parts, an internal tab and an external tab. Specifically, the internal tab is connected to the foregoing electrode assembly, and the external tab has one end welded and fixed to the internal tab and the other end extending outside the shell.

In the course of implementing this application, the inventor of this application finds that after the foregoing internal tab and external tab are welded, a weld mark will be formed, and burrs of the weld mark may puncture the foregoing shell, which makes the use of the battery cell have potential safety hazards.

### SUMMARY

This application aims to provide a battery cell and an electrical device to reduce potential safety hazards of a current battery cell possibly being punctured by a weld mark of a tab.

This application adopts the following technical solution to solve the technical problem thereof:

A battery cell includes a shell, an electrode assembly, a tab and an insulation element. The electrode assembly is accommodated in the shell and provided with two opposite first side faces. The tab includes a connecting portion and an extending portion, the connecting portion is accommodated in the shell and connected to the electrode assembly, and the extending portion and the connecting portion are welded and fixed, and form a weld mark. The insulation element includes a hot melting portion and an insulating portion. The hot melting portion is fixed to the first side face and the shell, and the hot melting portion is configured to at least partially melt to be bonded to an inner surface of the shell when a temperature is higher than a preset threshold value. The insulating portion is connected to the hot melting portion, and the insulating portion is fixed to the tab and cover at least part of the weld mark.

As a further improvement solution of the foregoing technical solution, the tab corresponds to two insulation elements, the two insulation elements are respectively connected to the two first side faces in a one-to-one corresponding mode, and the insulating portions of the two insulation elements jointly cover the weld mark.

As a further improvement solution of the foregoing technical solution, one portion of each hot melting portion stretches out of the corresponding first side face.

As a further improvement solution of the foregoing technical solution, the hot melting portion has a same thickness as the insulating portion.

As a further improvement solution of the foregoing technical solution, the insulation element includes a substrate layer, a first adhesive layer, a hot melting layer and a filling material layer. The substrate layer includes a first portion and a second portion connected to each other. The first adhesive layer is disposed on a face of the substrate layer facing towards the electrode assembly, and the insulation element is bonded and fixed to the first side face through the first adhesive layer. The hot melting layer is disposed on a face of the first portion facing away from the first adhesive layer, the hot melting layer includes a hot melting adhesive layer, and the hot melting adhesive layer is configured to melt to be bonded to the inner surface of the shell when the temperature is higher than the preset threshold value. The filling material layer is fixedly disposed on a face of the second portion facing away from the first adhesive layer. The hot melting portion includes the first portion, the portion of the first adhesive layer corresponding to the first portion, and the hot melting layer, and the insulating portion includes the second portion, the portion of the first adhesive layer corresponding to the second portion, and the filling material layer.

As a further improvement solution of the foregoing technical solution, the hot melting layer further includes a second adhesive layer, the second adhesive layer is disposed between the first portion of the substrate layer and the hot melting adhesive layer, and the hot melting adhesive layer is bonded and fixed to the substrate layer through the second adhesive layer.

As a further improvement solution of the foregoing technical solution, the substrate layer includes polyester resin; and/or the first adhesive layer includes at least one of epoxy resin, polyurethane and polyimide; and/or the hot melting adhesive layer includes ethylene-vinyl acetate copolymer; and/or the filling material layer includes at least one of polyester resin and ethylene-vinyl acetate copolymer.

As a further improvement solution of the foregoing technical solution, the electrode assembly includes a first electrode plate and a second electrode plate, and the first electrode plate are wound and form a plurality of straightly extending first flat portions. The battery cell includes at least one tab, the at least one tab includes a first tab, and a connecting portion of the first tab is connected to the plurality of first flat portions respectively.

As a further improvement solution of the foregoing technical solution, the connecting portion of the first tab includes a plurality of first connecting sheets, and each first connecting sheet corresponds to the corresponding first flat portion. One end of each first connecting sheet is connected to the corresponding first flat portion, and the other ends of the first connecting sheets are stacked and fixed.

As a further improvement solution of the foregoing technical solution, the second electrode plate is wound to form a plurality of second straightly extending second flat portions. The at least one tab further includes a second tab, and a connecting portion of the second tab is connected to the plurality of second flat portions respectively.

As a further improvement solution of the foregoing technical solution, the connecting portion of the second tab includes a plurality of second connecting sheets, and each second connecting sheet corresponds to the corresponding second flat portion. One end of each second connecting sheet is connected to the corresponding second flat portion, and the other ends of the second connecting sheets are stacked and fixed.

As a further improvement solution of the foregoing technical solution, the battery cell further includes a hot melting adhesive tape fixed to the first side face, and the hot melting adhesive tape is fixed to the shell. The hot melting adhesive tape are configured to at least partially melt to be bonded to the inner surface of the shell when the temperature is higher than the preset threshold value. The hot melting portion has a thickness less than or equal to the hot melting adhesive tape.

Another embodiment of this application further provides an electrical device, including any one of the foregoing battery cells.

The embodiments of this application have the beneficial effects that
the battery cell provided by the embodiment of this application includes a shell, an electrode assembly, a tab and insulation elements. The electrode assembly is provided with to opposite first side faces. The tab includes a connecting portion and an extending portion, the connecting portion is connected to the electrode assembly, and the extending portion and the connecting portion are welded and fixed, and form a weld mark. Each insulation element includes a hot melting portion and an insulating portion. The hot melting portions are fixed to the foregoing first side faces; and the insulating portions are connected to the hot melting portions, and the insulating portions are fixed to the tab and cover at least part of the weld mark.

Compared with current battery cells on the market, the battery cell provided by the embodiment of this application further includes the insulation elements, and the insulation elements cover at least part of the weld mark, which can reduce or eliminate an area of contact between the weld mark and the shell, thereby reducing potential safety hazards of the battery cell possibly being punctured by the weld mark of the tab.

### BRIEF DESCRIPTION OF DRAWINGS

In order to more clearly illustrate technical solutions in embodiments of this application, the following will briefly introduce accompanying drawings that are desired to be used in descriptions of the embodiments. Apparently, the accompanying drawings in the following descriptions are merely some embodiments of this application, and a person of ordinary skill in the art may further obtain other accompanying drawings according to structures shown in these accompanying drawings without creative work.
FIG. 1 is a schematic diagram of a battery cell provided by an embodiment of this application;
FIG. 2 is a schematic diagram of an electrode assembly in FIG. 1;
FIG. 3 is a schematic section diagram along an A-A line in FIG. 2;
FIG. 4 is a schematic section diagram along a B-B line in FIG. 2;
FIG. 5 is a schematic structural diagram of a hot melting adhesive tape in FIG. 1;
FIG. 6 is a schematic structural diagram of an insulation element in FIG. 2; and
FIG. 7 is a schematic diagram of an electrical device provided by an embodiment of this application.

### List of reference numerals

### 1.Battery cell;

100. Shell;
200. Electrode assembly; 210. First electrode plate; 220. Second electrode plate; 230. Separator; 211. First flat portion; 212. First bending portion; 221. Second flat portion; 222. Second bending portion; 201. First side face; 202. Second side face; 2011. First end; 2012. Second end;
300. Tab; 310. Connecting portion; 320. Extending portion; 330. First connecting sheet;
400. Insulation element; 410. Hot melting portion; 420. Insulating portion; 401. Substrate layer; 402. First adhesive layer; 403. Hot melting layer; 404. Filling material layer; 4011. First portion; 4012. Second portion; 4031. Hot melting adhesive layer; 4032. Second adhesive layer;
500. Hot melting adhesive tape; 501. Base material layer; 502. First bonding material layer; 503. Hot melting material layer; 5031. Hot melting adhesive material layer; 5032. Second bonding material layer; and

### 2. Electrical device.

### DETAILED DESCRIPTION OF EMBODIMENTS

For ease of understanding this application, this application is described in more detail below in conjunction with accompanying drawings and specific embodiments. It is thereby noted that when one component is expressed as being "fixed to"/"fixedly connected to" another component, it may be directly fixed to/fixedly connected to the another component, or there may also be one or more components disposed therebetween. When one component is expressed as being "connected" to another component, it may be directly connected to the another component, or there may also be one or more components disposed therebetween. The terms "vertical", "horizontal", "left", "right", "internal", "external" and similar expressions used in the description are merely for the purpose of illustration.

Unless otherwise defined, all technical and scientific terms used in the description shall have the same meanings as commonly understood by a person skilled in the technical field to which this application belongs. The terms used in the description of this application are merely intended to describe the specific embodiments but not to limit this application. The term "and/or" used in the description includes any and all combinations of one or more of the relevant listed items.

In addition, technical features involved in the different embodiments of this application described below may be mutually combined as long as they do not conflict with each other.

In the description, the "mounting" includes fixing or limiting a component or device to a specific position or place by welding, screwing, clamping, gluing, etc. The component or device may remain still in the specific position or place or may move within a limited range, and the component or device may or may not be dismounted after being fixed or limited to the specific position or place, which is not limited in the embodiments of this application.

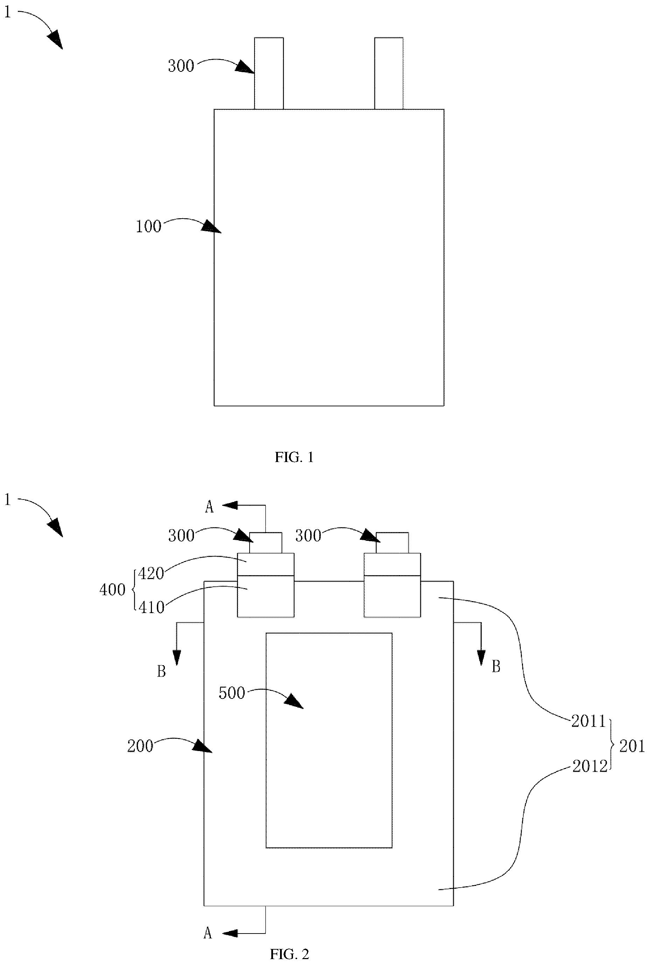

Referring to FIG. 1 to FIG. 3, which show a schematic diagram of a battery cell 1 provided by one of embodiments of this application, a schematic diagram of the battery cell 1 with a shell hidden, and a schematic section diagram of the battery cell 1 with the shell hidden along an A-A line shown in the figure respectively, the battery cell 1 includes a shell 100, an electrode assembly 200, a tab 300 and an insulation element 400. The shell 100 is a mounting structure of the foregoing structures. The electrode assembly 200 is accommodated in the shell 100 and provided with two opposite first side faces 201; and each first side face 201 is provided with a first end 2011 and a second end 2012 that are opposite to each other. The tab 300 is disposed close to the first ends 2011 and extends facing away from the second ends 2012 from the electrode assembly 200. The tab 300 includes a connecting portion 310 and an extending portion 320, and the connecting portion 310 is accommodated in the shell 100 and connected to the electrode assembly 200; and the extending portion 320 and the connecting portion 310 are welded and fixed, and form a weld mark, and the extending portion 320 has one end stretching out of the shell 100. The insulation element 400 includes a hot melting portion 410 and an insulating portion 420. The hot melting portion 410 is fixed to the foregoing first side faces 201, and the hot melting portion 410 is also fixed to the shell 100; and the hot melting portion 410 is configured to at least partially melt to be bonded to an inner surface of the shell 100 when a temperature is higher than a preset threshold value. The insulating portion 420 is connected to the hot melting portion 410, and the insulating portion 420 is fixed to the foregoing tab 300 and cover at least part of the foregoing weld mark. It is worth mentioning that the "preset threshold value" in this application document refers to a temperature at which the hot melting portion 410 is heated up to just the point where they begin to melt, and the temperature is higher than a temperature at which the battery cell 1 is normally used, so as to ensure that the hot melting portion 410 is in a solid state when the battery cell 1 is in a normal state (i.e. when no thermal runaway occurs).

For the foregoing shell 100, referring to FIG. 1, the shell 100 has an overall flat cuboid shape and is internally provided with an accommodating cavity (not shown in the figure) which is configured to accommodate the foregoing electrode assembly 200 and an electrolyte. In this embodiment, the battery cell 1 is a pouch-type cell, and the shell 100 is an aluminum-plastic film. It can be understood that in other embodiments of this application, the battery cell 1 can also be a hard shell battery cell, and correspondingly, the shell 100 is a metal shell.

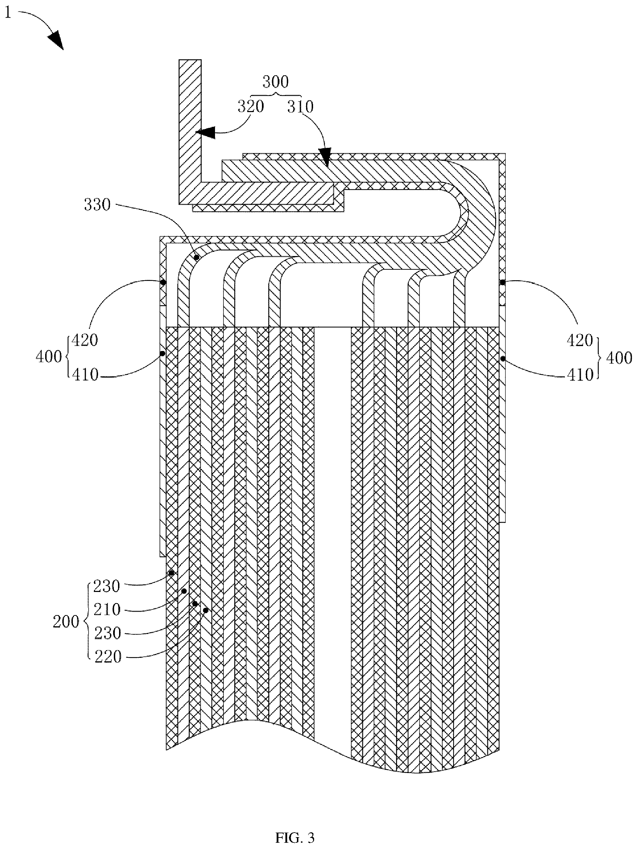

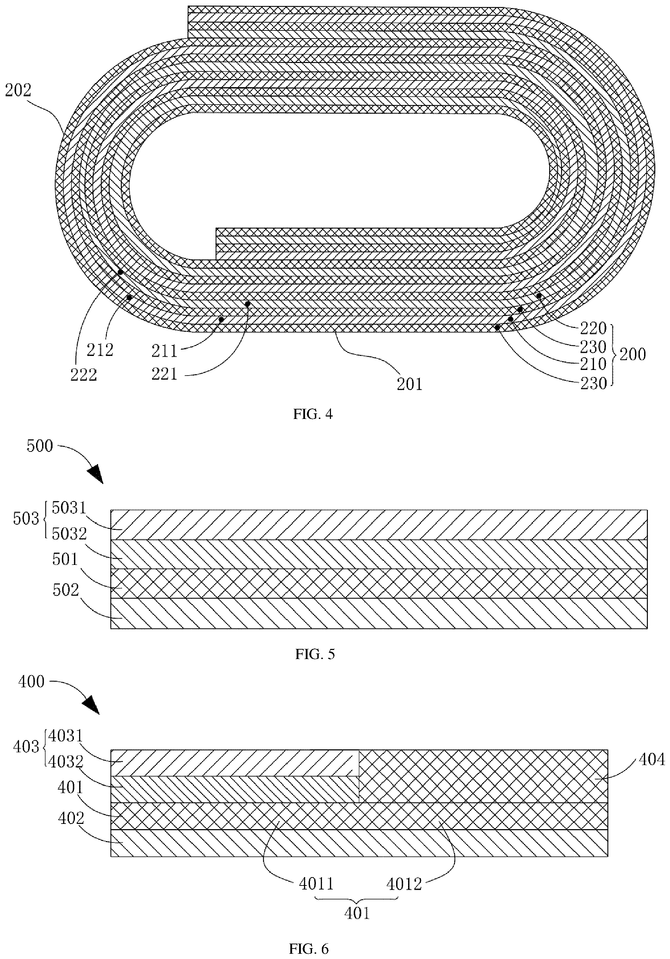

For the foregoing electrode assembly 200, referring to FIG. 3 and FIG. 4, which show schematic section diagrams of the battery cell 1 along A-A and B-B lines when the shell 100 is hidden respectively, and in conjunction with other accompanying drawings, the electrode assembly 200 is accommodated in the foregoing accommodating cavity and includes a first electrode plate 210 and a second electrode plate 220 that are spaced, as well as separators 230 disposed between and for separating the first electrode plate 210 and the second electrode plate 220. The first electrode plate 210 and the second electrode plate 220 have opposite polarities, one of the two electrode plates is a positive electrode plate, and the other electrode plate is a negative electrode plate; and the first electrode plate 210, the second electrode plate 220 and the separator 230 are stacked and wound into a columnar structure with an oblong section so as to be accommodated in the foregoing accommodating cavity. The electrode assembly 200 is provided with two opposite first side faces 201 and two opposite second side faces 202, and the foregoing oblong structure is jointly defined by the two first side faces 201 and the two second side faces 202, where the first side faces 201 are planar portions of an outer surface of the electrode assembly 200 and each first side face 201 is provided with a first end 2011 and a second end 2012 that are oppositely disposed in a direction where intersection lines of the first side faces 201 and the second side faces 202 extend, and the second side faces 202 are cambered portions of the outer surface of the electrode assembly 200. The shell 100 is further filled with an electrolyte, and the electrode assembly 200 is impregnated with the electrolyte, which is used for providing an environment for lithium ion conduction, so that the lithium ions can be embedded in the first electrode plate or the second electrode plate , thereby realizing charging and discharging processes of the electric cell 1.

For the foregoing first electrode plate 210 and second electrode plate 220, referring to FIG. 4, which shows the schematic section diagram along the B-B line in FIG. 2, and in conjunction with other accompanying drawings, the first electrode plate 210 is wound and form a plurality of straightly extending first flat portions 211 and a plurality of first bending portions 212 extending in a bending mode, where the first flat portions 211 and the first bending portions 212 are alternately disposed. Similarly, the second electrode plate 220 is wound and form a plurality of straightly extending second flat portions 221 and a plurality of second bending portions 222 extending in a bending mode, where the second flat portions 221 and the second bending portions 222 are alternately disposed.

Further, in order to firmly fix the electrode assembly 200 to the shell 100, the battery cell 1 further includes a hot melting adhesive tape 500, which is fixed to the foregoing first side face 201 and also fixed to the inner surface of the shell 100. The hot melting adhesive tape 500 is configured to at least partially melt to be bonded to the inner surface of the shell 100 when a temperature is higher than the preset threshold value, and thus the battery cell 1 can fix the electrode assembly 200 to the shell 100 by hot melting before leaving a factory. Specifically, reference is made to FIG. 5, which shows a schematic structural diagram of the hot melting adhesive tape 500. Meanwhile, in conjunction with other accompanying drawings, the hot melting adhesive tape 500 includes a base material layers 501, a first boning material layer 502 and a hot melting material layer 503. The base material layer 501 is a basic material layer for coating and bearing the foregoing first bonding material layer 502 and the hot melting material layer 503 and has a very thin flat cuboid shape. Optionally, the base material layer 501 includes polyester resin. The first bonding material layer 502 is disposed on a face of the base material layer 501 facing towards the foregoing electrode assembly 200 and has viscosity at room temperature, and the hot melting adhesive tape 500 is bonded and fixed to the first side faces 201 through the first bonding material layers 502. Optionally, the first bonding material layers 502 include at least one of epoxy resin, polyurethane and polyimide. The hot melting material layer 503 is disposed on a face of the foregoing base material layer 501 facing away from the first bonding material layer 502 and include a hot melting adhesive material layer 5031; and the hot melting adhesive material layer 5031 is configured to melt to be bond the inner surface of the shell 100 when a temperature is higher than the preset threshold value, that is, the hot melting adhesive material layer 5031 is bonded and fixed to the shell 100 by hot melting. Optionally, the hot melting adhesive material layer 5031 includes ethylene-vinyl acetate copolymer. The ethylene-vinyl acetate copolymers is a material widely applied to hot melting adhesives, and a melting point of the ethylene-vinyl acetate copolymer changes with the content of vinyl acetate. For example, in this embodiment, the content of the vinyl acetate is 18%, and a melting point of the hot melting adhesive material layer 5031 is about 80°C; however, in some other embodiments of this application, the content of the vinyl acetate can also be 14%, and correspondingly the melting point of the hot melting adhesive material layer 5031 is about 90°C; and in some other embodiments of this application, the content of the vinyl acetate is 28%, and correspondingly the melting point of the hot melting adhesive material layer 5031 is about 70°C; and examples are not listed herein one by one in detail, and a designer can correspondingly adjust the content of the vinyl acetate according to a temperature at which the battery cell 1 is used under a normal condition. It can be understood that in other embodiments of this application, the hot melting adhesive material layer 5031 can further include polyamide, polyesteramide, polyethylene and other kinds of thermoplastic resin. Preferably, in order to facilitate the hot melting adhesive material layer 5031 being disposed on the foregoing base material layer 501, the hot melting material layer 503 further includes a second bonding material layer 5032. Specifically, the second bonding material layer 5032 is disposed on a face of the base material layer 501 facing away from the foregoing first bonding material layer 502 and has certain viscosity at room temperature; and the hot melting adhesive material layer 5031 is bonded to a face of the second bonding material layer 5032 facing away from the base material layer 501. The second bonding material layer 5032 has substantially the same types of selected material as the foregoing first bonding material layer 502, and in an actual product of the battery cell 1, the materials of the second bonding material layer 5032 and the first bonding material layer 502 can be same or different.

For the foregoing tab 300, referring to FIG. 3, and in conjunction with other accompanying drawings, the tab 300 is disposed close to the foregoing first end 2011, extends in a direction facing away from the foregoing second ends 2012 from the electrode assembly 200, and includes a connecting portion 310 and an extending portion 320. The connecting portion 310 is accommodated in the shell 100 and connected to the electrode assembly 200; and the extending portion 320 and the connecting portion 310 are welded and fixed, and form a weld mark at a weld, and one end of the extending portion 320 runs through the foregoing shell 100 to be electrically connected to an external electrical device. In the embodiment, the battery cell 1 includes two tabs 300, one of the two tabs 300 is connected to the first electrode plate 210, and the other tab 300 is connected to the second electrode plate 220; and it can be understood that in other embodiments of this application, the battery cell 1 can further include only one tab 300, or include three or more tabs 300, that is, the battery cell 1 includes at least one tab 300. For ease of illustrating, the following will define the tab 300 connected to the first electrode plate 210 as a first tab and define the tab 300 connected to the second electrode plate 220 as a second tab; and next, specific structures of the first tab and the second tab are illustrated.

The first tab includes the foregoing connecting portion 310 and extending portion 320, where the connecting portion 310 is connected to the plurality of first flat portions 211 respectively, and the extending portion 320 is connected to the connecting portion 310 and extends until partially stretching out of the shell 100. Specifically, the connecting portion 310 includes a plurality of first connecting sheets 330, which are located on the same side of the electrode assembly 200, and for example, in this embodiment, each first connecting sheet 330 is located on an end of the foregoing first end 2011 facing away from the foregoing second end 2012. Each first connecting sheet 330 corresponds to a first flat portion 211, and each first connecting sheet 330 has one end connected to the corresponding first flat portion 211 and the other end extending in a direction facing away from the first electrode plate 210. The ends of the first connecting sheets 330 facing away from the first electrode plate 210 are stacked and fixed. More specifically, each first connecting sheet 330 includes a first connecting section, a first collecting section and a first bending section that are sequentially connected. Each first connecting section has one end connected to the corresponding first flat portion and the other end extending in a direction facing away from the electrode assembly 200. Each first collecting section extends in a direction perpendicular to the corresponding first flat portion 211, and the first collecting sections extend in the same direction and are stacked. Each first bending section has one end connected to the corresponding first collecting section and the other end bending in a direction facing away from the electrode assembly 200. Along an extending path of the first connecting sheets 330, the first collecting sections have an opposite extending direction from the first bending sections, that is, as shown in FIG. 3, the first collecting sections extend towards the right side of the figure, while the first bending sections face away from the electrode assembly 200 and then extends towards the left side of the figure. The foregoing first bending sections are also stacked and fixed. The extending portion 320 of the first tab has an overall L shape and includes a first extending section and a second extending section that are connected to each other, wherein the first connecting section is welded and fixed to the connecting portion, the second extending section is bent relative to the first extending section, and the end of the second extending section facing away from the first extending section extends out of the shell 100.

The second tab is disposed parallel to the foregoing first tab, and similar to the foregoing first tab, the second tab also includes a corresponding connecting portion 310 and extending portion 320, the connecting portion 310 is connected to the plurality of second flat portions, respectively, and the extending portion 320 is connected to the connecting portion 310 and extends until partially stretching out of the shell 100. Specifically, the connecting portion 310 of the second tab includes a plurality of second connecting sheets, which are located on the same side of the electrode assembly 200, and for example, in the embodiment, all the second connecting sheets are located on ends of the foregoing first ends 2011 facing away from the foregoing second ends 2012. Each second connecting sheet corresponds to a second flat portion 211, and each second connecting sheet has one end connected to the corresponding first flat portion 211 and the other end extending in a direction facing away from the second electrode plate 220. The ends of the second connecting sheets facing away from the second electrode plate 220 are stacked and fixed. More specifically, each second connecting sheet includes a second connecting section, a second collecting section and a second bending section that are sequentially connected. Each second connecting sheet has one end connected to the corresponding second flat portion and the other end extending in a direction facing away from the electrode assembly 200. Each second collecting section extends in a direction perpendicular to the corresponding second flat portion 211, and the second collecting sections extend in the same direction and are stacked. Each second bending section has one end connected to the corresponding second collecting section and the other end bending in a direction facing away from the electrode assembly 200. Along an extending path of the second connecting sheets, the second collecting sections have an opposite extending direction from the second bending sections. The foregoing second bending sections are also stacked and fixed. The extending portion 320 of the second tab also has an overall L shape and also includes a first extending section and a second extending section that are connected to each other, the first connecting section is welded and fixed to the end of the connecting portion 310 facing away from the electrode assembly 200, the second extending section is bent relative to the first extending section, and the end of the second extending section facing away from the first extending section extends out of the shell 100.

Referring to FIG. 2 and FIG. 3 first, the foregoing insulation element 400 includes a hot melting portion 410 and an insulating portion 420. The insulating portion 420 is fixed to the foregoing tabs 300 and cover at least parts of the foregoing weld marks, which can reduce or eliminate areas of contact between burrs of the weld marks and the shell 100, thereby reducing potential safety hazards of the shell 100 being punctured by the burrs of the weld marks. The hot melting portion 410 is fixed to the foregoing first side face 201 and also fixed to the shell 100, and is configured to at least partially melt to be bonded to the inner surface of the shell 100 when the temperature is higher than the preset threshold value, and thus the battery cell 1 can further fix the electrode assembly 200 to the shell 100 by hot melting before leaving the factory. The hot melting portion 410 is disposed in such a way that in the first aspect, a fixing effect on the insulation element 400 is strengthened, thereby avoiding the disadvantage of the insulation element 400 being prone to falling off from the tab 300 due to relatively small connecting areas of the insulating portion 420 and the tab 300; in the second aspect, the connecting strength between the electrode assembly 200 and the shell 100 is also increased, thereby reducing a risk of the electrode assembly 200 slipping relative to the shell 100 when the battery cell 1 falls; and in the third aspect, the thickness of the hot melting portion 410 itself can further be appropriately reduced by virtue of its melting properties in the bonding process of the hot melting adhesive tape 500 and the shell 100, thereby facilitating elimination of a gap between the hot melting adhesive tape 500 and the inner surface of the shell 100. Preferably, the hot melting portion 410 has the same thickness as the insulating portion 420, such that on the one hand, it is conducive to equal-thickness molding of the insulation element 400, and on the other hand, it is conducive to storage and preservation of the insulation element 400 in a stacked or wound mode. More preferably, one portion of the hot melting portion 410 stretches outside the foregoing corresponding first side face 201, such that the disadvantage of there being a gap between the corresponding hot melting adhesive tape and the inner surface of the shell 100 due to the relatively large thickness of the corresponding insulating portion 420 can be avoided. In addition, in order to fully wrap the weld mark of the tab 300, each tab 300 correspond to two insulation elements 400, the two insulation elements 400 are connected to the foregoing two first side faces 201 in a one-to-one-corresponding mode respectively, the insulating portion 420 of the two insulating members 400 are disposed exceeding the corresponding tab 300 respectively, and the insulating portions 420 of the two insulation elements 400 jointly cover the weld mark of the corresponding tab 300 so as to completely wrap the weld mark.

In some other embodiments, the insulation element 400 only includes the foregoing insulating portion 420, the insulating portion 420 has one part fixed to the tab and the other part fixed to the foregoing first side face. In order to ensure that the insulating portion 420 can better cover the foregoing weld marks, the insulating portion 420 have a relatively large thickness, which is greater than that of the foregoing hot melting adhesive tape 500, and thus the portions of the insulating portion 420 located on the foregoing first side face render certain gap between the hot melting adhesive tape and the inner surface of the shell 100, which is not conducive to connection of the hot melting adhesive tapes and the shell 100. Compared with the foregoing embodiments, through the provision of this embodiment in which the element 400 includes the hot melting portion 410, the thickness of the insulation element 400 can be reduced to a certain degree in the bonding process of the hot melting adhesive tape 500 and the shell 100, so as to eliminate the gap between the hot melting adhesive tape 500 and the shell 100. To sum up, in this embodiment, the hot melting portion 410 preferably have a thickness less than or equal to the forgoing hot melting adhesive tape, so as to fundamentally overcome the foregoing defects; and certainly, this application is not limited thereto, and in some other embodiments of this application, the insulating portion 420 can also have a greater thickness than the foregoing hot melting adhesive tape.

Next, referring to FIG. 6, which shows a schematic structural diagram of the insulation element 400. In this embodiment, the insulation element 400 includes a substrate layer 401, a first adhesive layer 402, a hot melting layer 403 and a filling material layer 404.The substrate layer 401 is basic material layer for coating and bearing the foregoing first adhesive layer 402, the hot melting layers 403 and the filling material layer 404, have a long strip shape, and includes a first portion 4011 and a second portion 4022 that are connected to each other. Optionally, the substrate layer 401 includes polyester resin. The first adhesive layer 402 is disposed on a face of the substrate layer 402 facing towards the foregoing electrode assembly 200, overall covering the foregoing first portion 4011 and second portion 4012. The first adhesive layer has viscosity under room temperatures, and the insulation element 400 is bonded and fixed to the first side face 201 through the first adhesive layer 402. Optionally, the first adhesive layer 402 includes at least one of epoxy resins, polyurethanes and polyimide. The hot melting layer 403 is disposed on a face of the foregoing first portion 4011 facing away from the first adhesive layer 402 and includes a hot melting adhesive layer 4031; and the hot melting adhesive layer 4031 is configured to melt to be bonded to the inner surface of the shell 100 when a temperature is higher than the preset threshold value, that is, the hot melting adhesive layer 4031 is bonded and fixed to the shell 100 by hot melting. Optionally, the hot melting adhesive layer 4031 includes ethylene-vinyl acetate copolymer. The ethylene-vinyl acetate copolymer is a material widely applied to hot melting adhesives, and a melting point of the ethylene-vinyl acetate copolymer changes with the content of vinyl acetate. For example, in this embodiment, the content of the vinyl acetate is 18%, and a melting point of the hot melting adhesive material layer 4031 is about 80°C; however, in some other embodiments of this application, the content of the vinyl acetate can also be 14%, and correspondingly, the melting point of the hot melting adhesive material layer 5031 is about 90°C; and in some other embodiments of this application, the content of the vinyl acetate is 28%, and correspondingly, the melting point of the hot melting adhesive material layer 5031 is about 70°C; and examples are not listed herein one by one in detail, and a designer can correspondingly adjust the content of the vinyl acetate according to a temperature at which the battery cell 1 is used under a normal condition. It can be understood that in other embodiments of this application, the hot melting adhesive material layer 4031 can further include polyamide, polyesteramide, polyethylene and other thermoplastic resin. Preferably, in order to facilitate the hot melting adhesive material layer 4031 being disposed on the foregoing substrate layer 401, the hot melting material layer 403 further includes a second adhesive layer 4032. Specifically, the second adhesive layer 4032 is disposed on a face of the first portion 4011 of the substrate layer 401 facing away from the foregoing first adhesive layer 402 and have certain viscosity at room temperature; and the hot melting adhesive layer 4031 is bonded to a face of the second adhesive layer 4032 facing away from the substrate layer 401, that is, the foregoing second adhesive layer 4032 is located between the first portion 4011 and the hot melting adhesive layer 4031. The second adhesive layer 4032 has substantially the same types of selected materials as the foregoing first adhesive layer 402, and in an actual product of the battery cell 1, the second adhesive layer 4032 can have the same or different materials than the first adhesive layers 402. The filling material layer 404 is fixedly disposed on a face of the foregoing second portion 4012 facing away from the first adhesive layer 402 and configured to increase the overall thickness of the corresponding second portion 4012 of the insulation element 400, such that on the one hand, the insulation element 400 can cover the burrs of the weld mark through the second portion without being punctured by the burrs of the weld mark, and on the other hand, it is also convenient for all portions of the insulation elements 400 to keep consistent. Optionally, the filling material layer 404 has the same materials as the foregoing substrate layer 401, that is, the filling material layers 404 includes polyester resin, such that it is conducive to reducing the types of raw materials of the insulation element 400, which, on the one hand, can reduce the cost of the selected materials and, on the other hand, is also conducive to the insulation element 400 being continuously coated in the manufacturing process to shorten the molding period thereof. It is to be understood that even if the filling material layer 404 in this embodiment includes the polyester resin, the specific materials of the filling material layer is not limited in this application, and the main purpose of which is to increase the overall thickness of the corresponding second portion 4012 of the insulation element 400. For example, in some other embodiments of this application, the filling material layer 404 can further have the same structure as the foregoing hot melting layer 403, i.e., including both the second adhesive layer 4032 and the hot melting adhesive layer; and for another example, in some other embodiments of this application, the filling material layer 404 only includes ethylene-vinyl acetate.

The foregoing hot melting portion 410 includes the first portion 4011, the portion of the first adhesive layer 402 corresponding to the first portion 4011, and the hot melting adhesive layer 4031. The first portion 4011 is bonded and fixed to the foregoing first side face 201. The foregoing insulating portion 420 includes the second portion 4012, the portion of the first adhesive layer 402 corresponding to the second portion 4012, and the filling material layer 404. The second portion 4012 is bonded and fixed to the tabs and cover at least part of the foregoing weld marks.

The battery cell 1 provided by the embodiment of this application includes the shell 100, the electrode assembly 200, a tab 300 and an insulation element 400. The tab 300 includes a connecting portion 310 and an extending portion 320, the connecting portion 310 is connected to the electrode assembly 200, and the extending portion 320 and the connecting portion 310 are welded and fixed, and form a weld mark. The insulation element 400 includes a hot melting portion 410 and an insulating portion 420. The hot melting portion 410 is fixed to the first side face 201 of the electrode assembly 200; and the insulating portion 420 is connected to the hot melting portion 410, and the insulating portion 420 is fixed to the tab 300 and cover at least part of the weld mark.

Compared with current battery cells on the market, the battery cell 1 provided by the embodiment of this application further includes the insulation elements 400, and the insulation elements 400 cover at least part of the weld mark, which can reduce or eliminate the area of contact between the weld mark and the shell 100, thereby reducing the potential safety hazards of the battery cell 1 possibly being punctured by the weld mark of the tab 300.

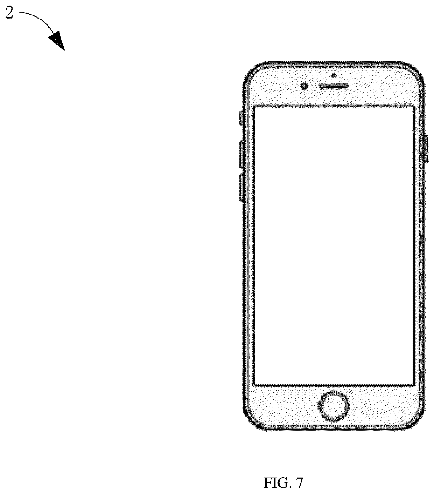

Based on the same inventive concept, this application further provides an electrical device. Referring to FIG. 7, which shows a schematic diagram of an electrical device 2 provided by one of the embodiments of this application, the electrical device 2 includes the battery cell 1 described in the foregoing embodiments. In the embodiment, the electrical device 2 is a mobile phone. It can be understood that in other embodiments of this application, the electrical device 2 can further be a tablet computer, a computer, an unmanned aerial vehicle, or the like that needs to be driven by electricity.

Finally, it is thereby noted that the foregoing embodiments are merely intended to illustrate technical solutions of this application rather than to limit this application; under the thought of this application, technical features in the foregoing embodiments or different embodiments may also be combined, steps may be implemented in any orders, and there are many other changes in different aspects of this application as described above, which are not provided in detail for the sake of brevity; although this application is illustrated in detail with reference to the foregoing embodiments, a person of ordinary skill in the art understands that he may still make modifications to the technical solutions recited in the foregoing embodiments or make equivalent replacements to some of the technical features; however, these modifications or replacements do not make the essence of the corresponding technical solution depart from the scope of the technical solutions of the embodiments.

## Claims

1. A battery cell, comprising a shell, an electrode assembly, a tab and an insulation element, **characterized in that** the electrode assembly is accommodated in the shell and provided with two opposite first side faces;
the tab comprises a connecting portion and an extending portion, the connecting portion is accommodated in the shell and connected to the electrode assembly, and the extending portion and the connecting portion are welded and fixed, and form a weld mark;
the insulation element comprises:
a hot melting portion, fixed to the first side faces and the shell, the hot melting portion being configured to at least partially melt to be bonded an inner surface of the shell when a temperature is higher than a preset threshold value; and
an insulating portion, connected to the hot melting portion, the insulating portion being fixed to the tab and covering at least part of the weld mark.

2. The battery cell according to claim 1, **characterized in that** the tab corresponds to two insulation elements, the two insulation elements are respectively connected to the two first side faces in a one-to-one corresponding mode, and the insulating portions of the two insulation elements jointly cover the weld mark.

3. The battery cell according to claim 1, **characterized in that** one portion of the hot melting portion stretches out of the corresponding first side face.

4. The battery cell according to claim 1, **characterized in that** the hot melting portion has a same thickness as the insulating portion.

5. The battery cell according to any one of claims 1 to 4, **characterized in that** the insulation element comprises:
a substrate layer, comprising a first portion and a second portion connected to each other;
a first adhesive layer, disposed on a face of the substrate layer facing towards the electrode assembly, the insulation element being bonded and fixed to the first side face through the first adhesive layer;
a hot melting layer, disposed on a face of the first portion facing away from the first adhesive layer, the hot melting layer comprising hot melting adhesive layer, the hot melting adhesive layer being configured to melt to be bonded to the inner surface of the shell when the temperature is higher than the preset threshold value; and
a filling material layer, fixedly disposed on a face of the second portion facing away from the first adhesive layer;
the hot melting portion comprises the first portion, a portion of the first adhesive layer corresponding to the first portion, and the hot melting layer, the insulating portion comprises the second portion, a portion of the first adhesive layer corresponding to the second portion, and the filling material layer.

6. The battery cell according to claim 5, **characterized in that** the hot melting layer further comprises a second adhesive layer, the second adhesive layer is disposed between the first portion of the substrate layer and the hot melting adhesive layer, and the hot melting adhesive layer is bonded and fixed to the substrate layer through the second adhesive layer.

7. The battery cell according to claim 5, **characterized in that** the substrate layer comprises polyester resin; and/or
the first adhesive layer comprises at least one of epoxy resin, polyurethane and polyimide; and/or
the hot melting adhesive layer comprises ethylene-vinyl acetate copolymer; and/or
the filling material layer comprises at least one of polyester resin and ethylene-vinyl acetate copolymer.

8. The battery cell according to claim 1, **characterized in that** the electrode assembly comprises a first electrode plate and a second electrode plate, and the first electrode plate is wound and form a plurality of straightly extending first flat portions; and
the battery cell comprises at least one tab, the at least one tab comprises a first tab, and a connecting portion of the first tab is connected to the plurality of first flat portions respectively.

9. The battery cell according to claim 1, **characterized in that** the battery cell further comprises a hot melting adhesive tape fixed to the first side face, and the hot melting adhesive tape is fixed to the shell;
the hot melting adhesive tape is configured to at least partially melt to be bonded to the inner surface of the shell when the temperature is higher than the preset threshold value; and
the hot melting portion has a thickness less than or equal to the hot melting adhesive tape.

10. An electrical device, **characterized in that**, comprising the battery cell according to any one of claims 1 to 9.
